# EUROPÄISCHE PATENTSCHRIFT

(11) **EP 2 344 380 B1**
(45) Veröffentlichungstag und Bekanntmachung des Hinweises auf die Patenterteilung: **30.04.2014**
(21) Anmeldenummer: 09743865.9
(22) Anmeldetag: 26.10.2009
(51) Int. Cl.: B64D 13/08, B64D 13/06

(54) **SYSTEM ZUR KÜHLUNG EINES WÄRMETAUSCHERS AN BORD EINES FLUGZEUGS**
SYSTEM FOR COOLING A HEAT EXCHANGER ON BOARD OF AN AIRCRAFT
SYSTÈME DE REFROIDISSEMENT D'UN ÉCHANGEUR DE CHALEUR À BORD D'UN AVION

(30) Priorität: 05.11.2008 DE 102008055888; 05.11.2008 US 111375
(43) Veröffentlichungstag der Anmeldung: 20.07.2011
(73) Patentinhaber: Airbus Operations GmbH, 21129 Hamburg (DE)
(72) Erfinder: KELNHOFER, Jürgen, 21635 Jork (DE)
(74) Vertreter: Schicker, Silvia
(86) Internationale Anmeldenummer: PCT/EP2009/007647
(87) Internationale Veröffentlichungsnummer: WO 2010/051919

(56) Entgegenhaltungen:
- WO-A1-99/51492
- WO-A2-2004/037641
- US-A- 3 208 234
- US-A- 4 966 005
- US-A1- 2006 059 942
- US-B1- 7 305 842

## Beschreibung

Die vorliegende Erfindung betrifft ein System zur Kühlung eines Wärmetauschers an Bord eines Flugzeugs. Ein solches System ist bekannt aus der WO 99/51492, die den nächstliegenden Stand der Technik darstellt und den Oberbegriff des Anspruchs 1 offenbart.

In modernen verkehrsflugzeugen sind in verschiedenen Systemen, wie z.B. einer flugzeugeigenen Klimaanlage, einem Enteisungssystem oder Kühlsystemen zur Kühlung wärmebelasteter Einrichtungen an Bord des Flugzeugs Wärmetauscher installiert. Die Wärmetauscher können, je nach Bedarf, als Gas/Gas-Wärmetauscher, Gas/Flüssigkeits-Wärmetauscher oder Flüssigkeits/Flüssigkeits-Wärmetauscher ausgebildet sein. Wärmetauscher, die dazu dienen, den Triebwerkskompressoren oder Hilfstriebwerkskompressoren entnommene heiße Zapfluft zur weiteren Verwendung in der Flugzeugklimaanlage oder dem Enteisungssystem des Flugzeugs zu kühlen, werden derzeit durch dem Triebwerk entnommene Triebwerkskühlluft, die sogenannte "fan air" gekühlt. Alternativ dazu können die von heißer Triebwerkszapfluft durchströmten Wärmetauscher auch durch Umgebungsluft gekühlt werden, die einen Kühlluftkanal durchströmt. Zur Förderung der Umgebungsluft durch den Kühlluftkanal kann heiße Triebwerkszapfluft über eine Injektordüse in den Kühlluftkanal geleitet werden. Der durch die Injektion der Triebwerkszapfluft in den Kühlluftkanal erzeugte Strahlpumpeneffekt sorgt dann dafür, dass ausreichend Umgebungsluft in den Kühlluftkanal und durch den zu kühlenden Wärmetauscher gesaugt wird.

Insbesondere bei Flugzeugen, die mit Propellertriebwerken ausgestattet sind, besteht das Problem, dass den Triebwerken keine Triebwerkskühlluft entnommen werden kann. Die Kühlung eines von heißer Triebwerkszapfluft durchströmten Wärmetauschers erfordert dann zwangsläufig den Einsatz eines Kühlkanals, in den über eine Injektordüse heiße Triebwerkszapfluft injiziert wird, um Umgebungsluft durch den Kühlluftkanal und den zu kühlenden Wärmetauscher zu fördern. Die Injektion von hochverdichteter Triebwerkszapfluft in einen Kühlkanal kann jedoch aufgrund der Entspannung der Triebwerkszapfluft in dem Kühlkanal zu erheblichen Geräuschemissionen führen. Ferner ist zur Abfuhr großer Wärmemengen von dem von heißer Triebwerkszapfluft durchströmten Wärmetauscher ein hoher Kühlluftmassenstrom erforderlich, der nur durch die Injektion eines entsprechend hohen Injektionsluftmassenstroms in den Kühlkanal durch den Kühlkanal gefördert werden kann. Schließlich hat ein Kühlsystem, bei dem Umgebungsluft durch die Injektion von Triebwerkszapfluft in einen Kühlkanal durch den Kühlkanal gefördert wird, den Nachteil, dass die Triebwerkszapfluft nicht direkt, sondern nur indirekt zu Kühlung genutzt wird. Dies führt zu Einbußen in der Energieeffizienz des Systems.

Die Erfindung ist auf die Aufgabe gerichtet, ein System zur Kühlung eines Wärmetauschers an Bord eines Flugzeugs anzugeben, das ohne die Nutzung von Triebwerkskühlluft energieeffizient betrieben werden kann.

Diese Aufgabe wird mit den Merkmalen des Anspruchs 1 gelöst.

Zur Lösung dieser Aufgabe umfasst ein erfindungsgemäßes System zur Kühlung eines Wärmetauschers an Bord eines Flugzeugs eine Prozessluftleitung, deren erstes Ende mit einem Triebwerk des Flugzeugs verbunden ist, um der Prozessluftleitung Triebwerkszapfluft, d.h. Luft mit einem erhöhten Druck und mit einer erhöhten Temperatur zuzuführen. Ein zweites Ende der Prozessluftleitung ist mit einer Eingangsseite einer Turbine verbunden, um die die Prozessluftleitung durchströmende Triebwerkszapfluft der Turbine zuzuführen. In der Turbine wird die unter einem erhöhten Druck stehende Triebwerkszapfluft entspannt und erfährt dabei eine Abkühlung. Ein erstes Ende einer Kühlluftleitung ist daher mit einer Ausgangsseite der Turbine verbunden, um der Kühlluftleitung durch Entspannung der Triebwerkszapfluft in der Turbine erzeugte Kühlluft zuzuführen. Die Kühlluftleitung ist ferner dazu eingerichtet, die die Kühlluftleitung durchströmende Kühlluft dem zu kühlenden Wärmetauscher zuzuführen. Die Kühlluftleitung kann auf jede beliebige Weise thermisch mit dem Wärmetauscher gekoppelt sein. Wesentlich ist lediglich, dass ein ordnungsgemäßer Kühlenenergietransfer von der die Kühlluftleitung durchströmenden Kühlluft auf den zu kühlenden Wärmetauscher gewährleistet ist. Beispielsweise kann sich die Kühlluftleitung in geeigneter Form durch den Wärmetauscher erstrecken. Der zu kühlende Wärmetauscher kann ein Einzelwärmetauscher oder ein Mehrfachwärmetauscher sein.

Das erfindungsgemäße Kühlsystem ermöglicht ohne die Nutzung von Triebwerkskühlluft sowohl im Bodenbetrieb als auch im Flugbetrieb des Flugzeugs eine ordnungsgemäße Kühlung des an Bord des Flugzeugs vorgesehenen Wärmetauschers. Das Kühlsystem ist daher auch in mit Propellertriebwerken ausgestatteten Flugzeugen, bei denen eine Abzapfung von Triebwerkskühlluft nicht möglich ist, uneingeschränkt einsetzbar. Darüber hinaus ist das Kühlsystem verhältnismäßig geräuscharm betreibbar, so dass der Einsatz von Geräuschdämmmaterial, wie er bei aus dem Stand der Technik bekannten Kühlsystemen, bei denen Umgebungsluft durch die Injektion von Triebwerkszapfluft in einen Kühlkanal durch den Kühlkanal gefördert wird, erforderlich ist, vermieden werden kann. Dies ermöglicht Kosten- und Gewichteinsparungen. Ein weiterer Vorteil des erfindungsgemäßen Kühlsystems ist sein einfacher Aufbau. Das Kühlsystem kann daher, falls erforderlich, auf verhältnismäßig einfache Art und Weise in ein übergeordnetes Kühlsystem integriert werden. Schließlich benötigt das erfindungsgemäße Kühlsystem lediglich verhältnismäßig wenig Einbauraum.

Die Prozessluftleitung des erfindungsgemäßen Kühlsystems zweigt von einer Triebwerkszapfluftleitung ab, deren erstes Ende mit dem Triebwerk des Flugzeugs verbunden ist, um der Triebwerkszapfluftleitung Triebwerkszapfluft zuzuführen. Die Triebwerkszapfluftleitung kann andere Systeme an Bord des Flugzeugs, wie z.B. die Flugzeugklimaanlage oder ein Enteisungssystem des Flugzeugs mit Triebwerkszapfluft versorgen. Falls dies zur weiteren Verwertung der Triebwerkszapfluft beispielsweise in den oben genannten Flugzeugsystemen erforderlich ist, kann die Triebwerkszapfluftleitung, die die Triebwerkszapfluftleitung durchströmende Triebwerkszapfluft einer geeigneten Kühleinrichtung zuführen. Beispielsweise kann die Triebwerkszapfluftleitung dazu eingerichtet sein, die die Triebwerkszapfluftleitung durchströmende Triebwerkszapfluft durch den Wärmetauscher zu leiten, der mittels des erfindungsgemäßen Kühlsystems gekühlt wird.

Die Prozessluftleitung kann bezogen auf die Strömungsrichtung der Triebwerkszapfluft durch die Triebwerkszapfluftleitung stromaufwärts des zu kühlenden Wärmetauschers von der Triebwerkszapfluftleitung abzweigen. Bei einer derartigen Anordnung kann die Triebwerkszapfluft der Prozessluftleitung und folglich der Turbine ohne Druck- und Temperaturverluste zugeführt werden. Falls dies gewünscht oder erforderlich ist, kann die Prozessluftleitung bezogen auf die Strömungsrichtung der Triebwerkszapfluft durch die Triebwerkszapfluftleitung jedoch auch stromabwärts des Wärmetauschers von der Triebwerkszapfluftleitung abzweigen.

Der zu kühlende Wärmetauscher kann ausschließlich durch die die Kühlluftleitung durchströmende Kühlluft gekühlt werden. Alternativ dazu kann der zu kühlende Wärmetauscher jedoch auch in einem von Umgebungsluft durchströmbaren Kühlkanal angeordnet sein. Der Kühlkanal kann beispielsweise in Form eines Stauluftkanals ausgebildet sein. Im Flugbetrieb des Flugzeugs kann der Wärmetauscher dann durch Umgebungsluft gekühlt werden, die den Kühlkanal durchströmt, wohingegen im Bodenbetrieb des Flugzeugs eine Kühlung des Wärmetauschers durch die die Kühlluftleitung durchströmende Kühlluft möglich ist. Ferner kann bei einer derartigen Anordnung zumindest im Flugbetrieb des Flugzeugs eine gleichzeitige Kühlung des Wärmetauschers durch Umgebungsluft und Kühlluft aus der Kühlluftleitung erfolgen. Dadurch kann die Kühlleistung des erfindungsgemäßen Kühlsystems erhöht werden.

Je nach Bauart des Wärmetauschers können die den Kühlkanal durchströmende Umgebungsluft und die Kühlluft aus der Kühlluftleitung als separate Luftströme durch den Wärmetauscher geleitet werden. Alternativ dazu ist es jedoch auch denkbar, die den Kühlkanal durchströmende Umgebungsluft und die Kühlluft aus der Kühlluftleitung stromaufwärts oder stromabwärts des Wärmetauschers zu einem einzigen Luftstrom zusammenzufassen. Eine derartige Ausgestaltung des erfindungsgemäßen Kühlsystems kann beispielsweise durch eine in den Kühlkanal mündende Kühlluftleitung realisiert werden.

Das erfindungsgemäße System zur Kühlung eines Wärmetauschers an Bord eines Flugzeugs umfasst vorzugsweise ferner einen von der Turbine angetriebenen Kompressor, der dazu eingerichtet ist, Umgebungsluft anzusaugen und zu verdichten. Beispielsweise können die Turbine und der Kompressor in Form einer Kompressor/Turbinen-Einheit ausgeführt und auf einer gemeinsamen Welle angeordnet sein. Die von dem Kompressor angesaugte und verdichtete Umgebungsluft kann ungenutzt in die Umgebung zurückgeführt werden. Vorzugsweise wird die von dem Kompressor erzeugte verdichtete Luft jedoch einer weiteren Nutzung zugeführt. Beispielsweise kann die von dem Kompressor erzeugte verdichtete Luft anderen Flugzeugsystemen, wie z.B. der Flugzeugklimaanlage zugeführt werden. Alternativ oder zusätzlich dazu ist jedoch auch die Nutzung der von dem Kompressor erzeugten verdichteten Luft in dem erfindungsgemäßen Kühlsystem möglich.

Beispielsweise kann eine Eingangsseite des Kompressors mit einer Umgebungsluftleitung verbunden sein, um Umgebungsluft in die Umgebungstuftleitung zu fördern, wobei die Umgebungsluftleitung dazu eingerichtet sein kann, die die Umgebungsluftleitung durchströmende Umgebungsluft dem zu kühlenden Wärmetauscher zuzuführen. Mit anderen Worten, der Kompressor kann dazu genutzt werden, dem Wärmetauscher zusätzlich zu der Kühlluft aus der Kühlluftleitung kühlende Umgebungsluft zuzuführen. Dadurch kann nicht nur die Kühlleistung, sondern auch die Energieeffizienz des Kühlsystems gesteigert werden. Die Umgebungsluftleitung kann auf jede beliebige Weise thermisch mit dem Wärmetauscher gekoppelt sein. Wesentlich ist lediglich, dass ein ordnungsgemäßer Kühlenenergietransfer von der die Umgebungsluftleitung durchströmenden Umgebungsluft auf den zu kühlenden Wärmetauscher gewährleistet ist.

Falls der zu kühlende Wärmetauscher in einem von Umgebungsluft durchströmbaren Kühlkanal angeordnet ist, kann die Eingangsseite des Kompressors auch mit dem Kühlkanal verbunden sein, um Umgebungsluft durch den Kühlkanal zu fördern. Mit anderen Worten, die Umgebungsluftleitung, die mit der Eingangsseite des Kompressors in Verbindung steht, kann teilweise oder vollständig durch den Kühlkanal gebildet werden. Alternativ dazu ist es auch denkbar, die Umgebungsluftleitung und den Kühlkanal so zu gestalten, dass die Umgebungsluftleitung oder ein Abschnitt der Umgebungsluftleitung in den Kühlkanal mündet, so dass über die Umgebungsluftleitung aus der Umgebung gesaugte Umgebungsluft in den Kühlkanal zugeführt werden kann.

Bei einer alternativen Ausgestaltung des erfindungsgemäßen Kühlsystems ist eine Ausgangsseite des Kompressors mit einer Kompressorluftleitung verbunden, um der Kompressorluftleitung verdichtete Kompressorluft zuzuführen, wobei die Kompressorluftleitung dazu eingerichtet ist, die die Kompressorluftleitung durchströmende Kompressorluft dem zu kühlenden Wärmetauscher zuzuführen. Auch bei dieser Ausgestaltung des erfindungsgemäßen Kühlsystems wird der Kompressor dazu genutzt, dem Wärmetauscher zusätzliche kühlende Luft zuzuführen. Somit erlaubt auch diese Ausführungsform des Kühlsystems eine Steigerung der Kühlleistung und der Energieeffizienz des Systems. Die Kompressorluftleitung kann auf jede beliebige Weise thermisch mit dem Wärmetauscher gekoppelt sein. Wesentlich ist lediglich, dass ein ordnungsgemäßer Kühlenenergietransfer von der die Kompressorluftleitung durchströmenden Kompressorluft auf den zu kühlenden Wärmetauscher gewährleistet ist.

Die Kompressorluftleitung kann sich in Form einer separaten Leitung durch den zu kühlenden Wärmetauscher erstrecken. Alternativ dazu kann die Kompressorluftleitung jedoch auch in die Kühlluftleitung münden, so dass die die Kompressorluftleitung durchströmende Kompressorluft und die die Kühlluftleitung durchströmende Kühlluft in Form eines einzigen Luftstroms durch den Wärmetauscher geleitet werden können. Falls der Wärmetauscher in einem von Umgebungsluft durchströmbaren Kühlkanal angeordnet ist, kann die Kompressorluftleitung oder ein Abschnitt der Kompressorluftleitung auch in den Kühlkanal münden. Ferner kann die Ausgangsseite des Kompressors unmittelbar mit dem Kühlkanal verbunden sein, so dass die Kompressorluftleitung vollständig oder teilweise durch den Kühlkanal gebildet werden kann. Schließlich kann der Kompressor auch in den Kühlkanal integriert sein.

Bevorzugte Ausführungsformen des erfindungsgemäßen Systems zur Kühlung eines Wärmetauschers an Bord eines Flugzeugs werden nun anhand der beigefügten schematischen Zeichnungen näher erläutert, von denen:
- Figur 1: eine erste Ausführungsform eines Systems zur Kühlung eines Wärmetauschers an Bord eines Flugzeugs zeigt,
- Figur 2: eine zweite Ausführungsform eines Systems zur Kühlung eines Wärmetauschers an Bord eines Flugzeugs zeigt,
- Figur 3: eine dritte Ausführungsform eines Systems zur Kühlung eines Wärmetauschers an Bord eines Flugzeugs zeigt,
- Figur 4: eine vierte Ausführungsform eines Systems zur Kühlung eines Wärmetauschers an Bord eines Flugzeugs zeigt,
- Figur 5: eine fünfte Ausführungsform eines Systems zur Kühlung eines Wärmetauschers an Bord eines Flugzeugs zeigt,
- Figur 6: eine sechste Ausführungsform eines Systems zur Kühlung eines Wärmetauschers an Bord eines Flugzeugs zeigt,
- Figur 7: eine siebte Ausführungsform eines Systems zur Kühlung eines Wärmetauschers an Bord eines Flugzeugs zeigt und
- Figur 8: eine achte Ausführungsform eines Systems zur Kühlung eines Wärmetauschers an Bord eines Flugzeugs zeigt.

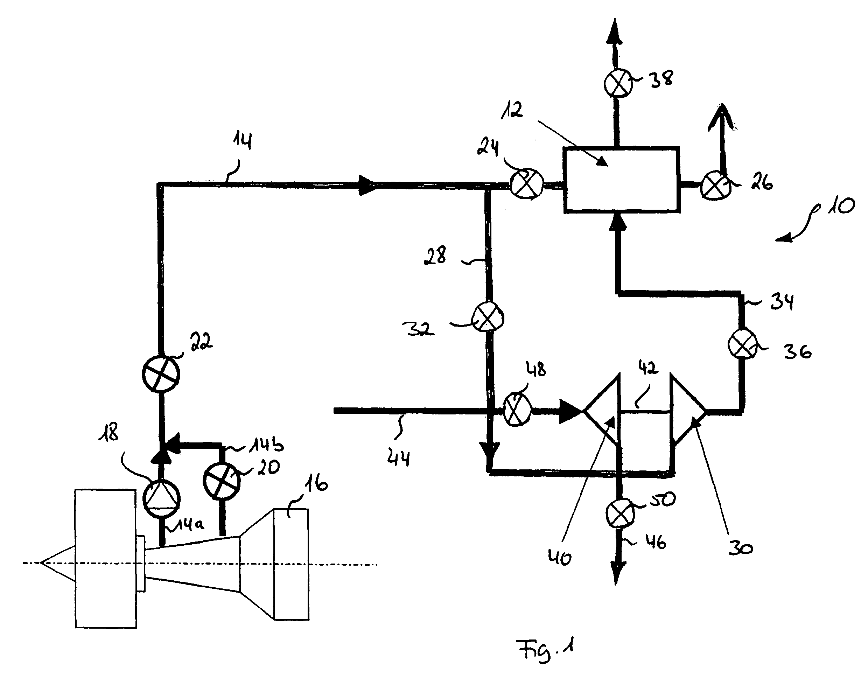

Ein in Figur 1 mit 10 bezeichnetes Kühlsystem dient dazu, an Bord eines Flugzeugs einen Wärmetauscher 12 mit Kühlenergie zu versorgen. Der Wärmetauscher 12 kann als Einfach- oder Mehrfachwärmetauscher ausgeführt sein und wird von heißer Triebwerkszapfluft durchströmt, die dem Wärmetauscher 12 von einer Triebwerkszapfluftleitung 14 zugeführt wird. An ihrem ersten Ende weist die Triebwerkszapfluftleitung 14 zwei Triebwerkszapfluftleitungszweige 14a, 14b auf. Die Triebwerkszapfluftleitungszweige 14a, 14b sind an unterschiedlichen Positionen mit einem Triebwerk 16 des Flugzeugs verbunden. Dem Triebwerk 16 entnommene heiße Triebwerkszapfluft strömt somit über die Triebwerkszapfluftleitungszweige 14a, 14b in die Triebwerkszapftuftieitung 14 und von dort durch den Wärmetauscher 12. Nach den Durchströmen des Wärmetauschers 12 wird die Triebwerkszapfluft einer nicht näher veranschaulichten Flugzeugklimaanlage sowie einem ebenfalls nicht dargestellten Flügelenteisungssystems des Flugzeugs zugeführt.

Die den Triebwerkszapfluftleitungszweig 14b durchströmende Triebwerkszapfluft hat einen höheren Systemdruck als die Triebwerkszapfluft, die durch den Triebwerkszapfluftleitungszweig 14a aus dem Triebwerk 16 des Flugzeugs abgeführt wird. Um zu verhindern, dass die unter einem höheren Druck stehende Triebwerkszapfluft aus dem Triebwerkszapfluftleitungszweig 14b über den Triebwerkszapfluftleitungszweig 14a in das Triebwerk 16 zurückströmt, ist in dem Triebwerkzapfluftleitungszweig 14a ein Rückschlagventil 18 angeordnet. Die Triebwerkszapfluftströmung durch den Triebwerkszapfluftleitungszweig 14b wird dagegen durch ein Steuerventil 20 gesteuert. Weitere Steuerventile 22, 24 steuern die Strömung der Triebwerkszapfluft durch die Triebwerkszapfluftleitung 14 zwischen einem Verbindungspunkt der Triebwerkszapfluftleitungszweige 14a, 14b und dem Wärmetauscher 12. Schließlich ist ein weiteres Steuerventil 26 stromabwärts des Wärmetauschers 12 in der Triebwerkszapfluftleitung 14 angeordnet, das die Zufuhr von Triebwerkszapfluft in die Flugzeugklimaanlage und das Flügelenteisungssystems des Flugzeugs steuert.

Stromaufwärts des Wärmetauschers 12 zweigt von der Triebwerkszapfluftleitung 14 eine Prozessluftleitung 28 ab. Ein mit der Triebwerkszapfluftleitung 14 verbundenes erstes Ende der Prozessluftleitung 28 ist somit über die Triebwerkszapfluftleitung 14 und die Triebwerkszapfluftleitungszweige 14a, 14b mit dem Triebwerk 16 des Flugzeugs verbunden, so dass die Prozessluftleitung 28, ebenso wie die Triebwerkszapfluftleitung 14, von dem Triebwerk 16 entnommener heißer Triebwerkszapfluft durchströmt wird. Ein zweites Ende der Prozessluftleitung 28 ist mit einer Eingangsseite einer Turbine 30 verbunden, so dass der Turbine 30 über die Prozessluftleitung 28 heiße hochverdichtete Triebwerkszapfluft zugeführt wird. Die Steuerung der Triebwerkszapfluftströmung durch die Prozessluftleitung 28 erfolgt mittels eines in der Prozessluftleitung 28 stromaufwärts der Turbine 30 angeordneten Steuerventils 32.

Beim Durchströmen der Turbine 30 wird die heiße hochverdichtete Triebwerkszapfluft entspannt und erfährt dabei eine Abkühlung. Die entspannte abgekühlte Triebwerkszapfluft wird als Kühlluft einer Kühlluftleitung 34 zugeführt, deren erstes Ende mit einer Ausgangsseite der Turbine 30 verbunden ist. In ihrem weiteren Verlauf ist die Kühlluftleitung 34 thermisch mit dem Wärmetauscher 12 gekoppelt, so dass die Kühlenergie der die Kühlluftleitung 34 durchströmenden Kühlluft zur Kühlung des Wärmetauschers 12 genutzt werden kann. Die thermische Kopplung zwischen der Kühlluftleitung 34 und dem Wärmetauscher 12 kann auf jede beliebige geeignete Weise hergestellt werden. Beispielsweise kann sich die Kühlluftleitung 34 durch den Wärmetauscher 12 erstrecken. Die Steuerung der Kühlluftströmung durch die Kühlluftleitung 34 zwischen der Ausgangsseite der Turbine 30 und dem Wärmetauscher 12 erfolgt mit Hilfe eines Steuerventils 36.

Stromabwärts des Wärmetauschers 12, d.h. nachdem die die Kühlluftleitung 34 durchströmende Kühlluft ihre Kühlenergie an den Wärmetauscher, d.h. die den Wärmetauscher 12 durchströmende heiße Triebwerkszapfluft aus der Triebwerkszapfluftleitung 14 abgegeben hat, wird die die Kühlluftleitung 34 durchströmende Kühlluft an die Umgebung abgeführt. Die Kühlluftabfuhr an die Umgebung wird mit Hilfe eines Steuerventils 38 gesteuert, das stromabwärts des Wärmetauschers 12 in der Kühlluftleitung 34 angeordnet ist.

Die durch die Entspannung der heißen hochverdichteten Triebwerkszapfluft in der Turbine 30 erzeugte Energie wird zum Antreiben eines Kompressors 40 genutzt, der mit der Turbine 30 eine Kompressor/Turbinen-Einheit bildet und mit der Turbine 30 auf einer gemeinsamen Welle 42 angeordnet ist. Eine Eingangsseite des Kompressors 40 ist mit einer Umgebungsluftleitung 44 verbunden, so dass der Kompressor 40 im Betrieb über die Umgebungsluftleitung 44 Umgebungsluft ansaugt. In dem Kompressor 40 wird die Umgebungsluft verdichtet. Eine Ausgangsseite des Kompressors 40 ist mit einer Kompressorluftleitung 46 verbunden. Die die Kompressorluftleitung 46 durchströmende verdichtete Kompressorluft kann ungenutzt in die Umgebung abgeführt werden. Alternativ dazu kann die Kompressorluft aus der Kompressorluftleitung 46 jedoch auch einem anderen System des Flugzeugs, beispielsweise der Flugzeugklimaanlage oder einem anderen Kompressorluft benötigenden System zugeführt werden. Die Steuerung der Umgebungsluftströmung durch die Umgebungsluftleitung 44 erfolgt mittels eines in der Umgebungsluftleitung 44 angeordneten Steuerventils 48. Zur Steuerung der Kompressorluftströmung durch die Kompressorluftleitung 46 ist in der Kompressorluftleitung 46 ein Steuerventil 50 angeordnet.

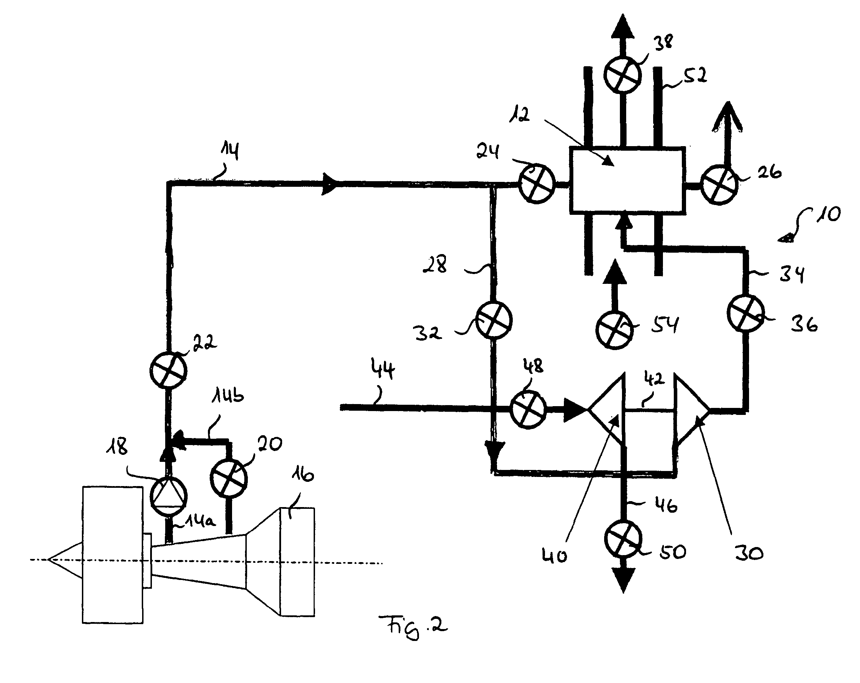

Das in Figur 2 gezeigte Kühlsystem 10 unterscheidet sich von der in Figur 1 veranschaulichten Anordnung dadurch, dass der Wärmetauscher 12 in einem Kühlkanal 52 angeordnet ist. Der Kühlkanal 52 wird von Umgebungsluft durchströmt und kann beispielsweise in Form eines Stauluftkanals ausgebildet sein. Zur Steuerung der Umgebungsluftströmung durch den Kühlkanal 52 ist ein Steuerventil 54 vorgesehen. Das Steuerventil 54 kann beispielsweise in Form einer Stauluftkanaleinlassklappe ausgebildet sein.

Im Flugbetrieb des Flugzeugs, wenn das Flugzeug eine entsprechend hohe Eigengeschwindigkeit besitzt, wird der Kühlkanal 52 von Umgebungsluft durchströmt, so dass der Wärmetauscher 12 ausschließlich durch die Kühlenergie gekühlt werden kann, die in der den Kühlkanal 52 durchströmende Umgebungsluft enthalten ist. Alternativ dazu ist im Flugbetrieb des Flugzeugs jedoch auch eine Kühlung des Wärmetauschers 12 durch eine Kombination aus dem Kühlkanal 52 durchströmender Umgebungsluft und Kühlluft aus der Kühlluftleitung 34 möglich. Im Flugbetrieb des Flugzeugs kann somit durch die Nutzung der Kühlkanal 52 durchströmenden Umgebungsluft und der Kühlluft aus der Kühlluftleitung 34 zur Kühlung des Wärmetauschers 12 die Kühlleistung des Systems erhöht werden. Falls der Wärmetauscher 12 auch ausschließlich durch die den Kühlkanal 52 durchströmende Umgebungsluft gekühlt werden kann, kann auf die Entnahme von Triebwerkszapfluft über die Prozessluftleitung 28 verzichtet werden. Hierzu kann beispielsweise das Steuerventil 32 geschlossen werden. Im Bodenbetrieb des Flugzeugs sorgt dagegen die Kühlluft aus der Kühlluftleitung 34 für eine ausreichende Kühlung des Wärmetauschers 12.

Die den Kühlkanal 52 durchströmende Umgebungsluft und die Kühlluft aus der Kühlluftleitung 34 können als separate Luftströme durch den Wärmetauscher 12 geleitet oder anderweitig in thermischen Kontakt mit dem Wärmetauscher 12 gebracht werden. Alternativ dazu können die den Kühlkanal 52 durchströmende Umgebungsluft und die Kühlluft aus der Kühlluftleitung 34 jedoch auch stromaufwärts oder stromabwärts des Wärmetauschers zu einem einzigen Luftstrom vereinigt werden. Hierzu kann, wie in Figur 2 gezeigt ist, die Kühlluftleitung 34 in den Kühlkanal 52 münden. Im übrigen entsprechen der Aufbau und die Funktionsweise des in Figur 2 gezeigten Kühlsystems 10 dem Aufbau und der Funktionsweise der in Figur 1 veranschaulichten Anordnung.

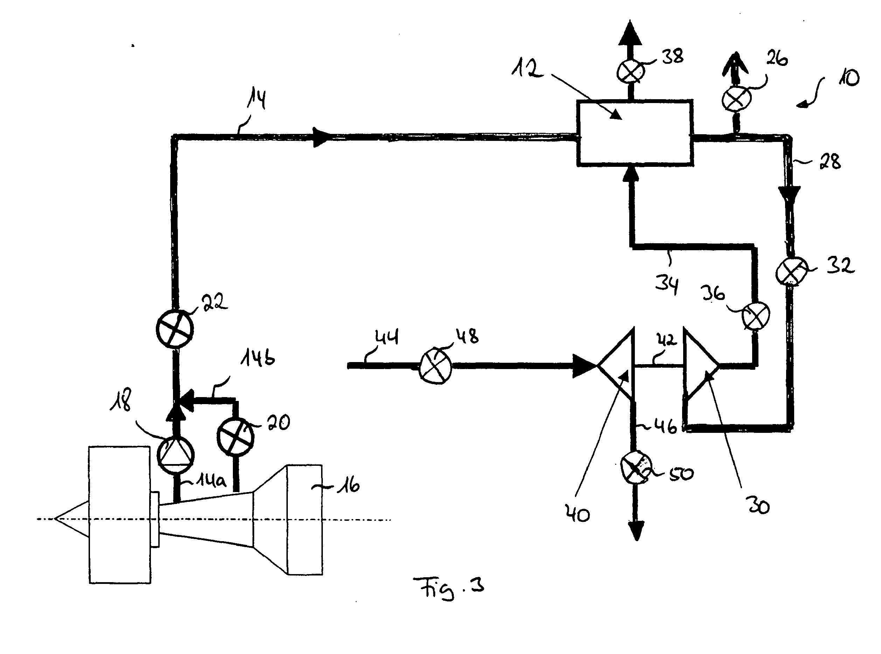

Das in Figur 3 gezeigte Kühlsystem 10 unterscheidet sich von der Anordnung gemäß Figur 1 dadurch, dass die Prozessluftleitung 28 nicht stromaufwärts, sondern stromabwärts des Wärmetauschers 12 von der Triebwerkszapfluftleitung 14 abzweigt. Im übrigen entsprechen der Aufbau und die Funktionsweise des Kühlsystems 10 gemäß Figur 3 dem Aufbau und der Funktionsweise des in Figur 1 veranschaulichten Systems.

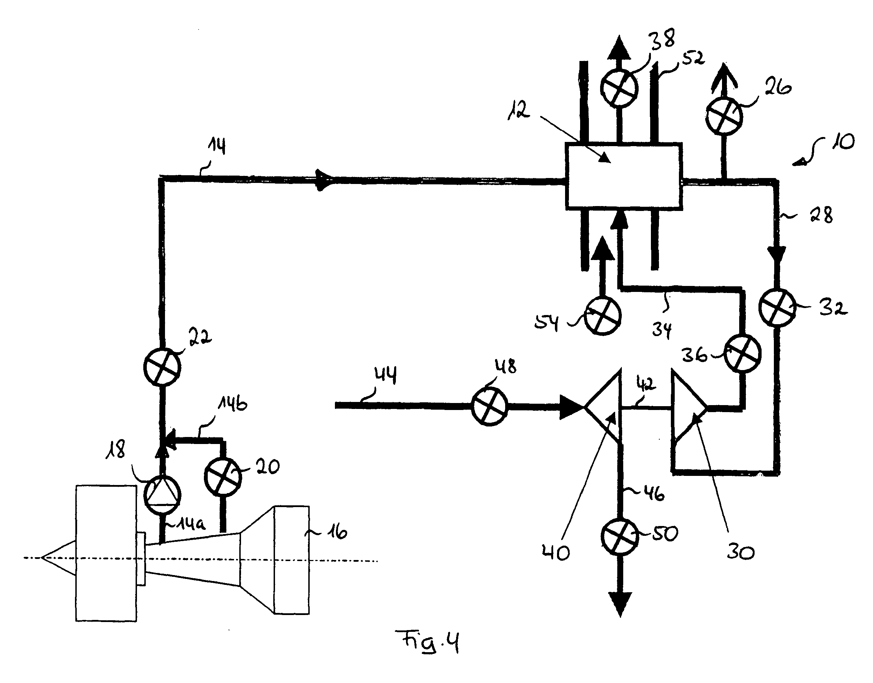

In ähnlicher Weise unterscheidet sich das in Figur 4 gezeigte Kühlsystem 10 von dem System gemäß Figur 2 dadurch, dass die Prozessluftleitung 28 nicht stromaufwärts, sondern stromabwärts des Wärmetauschers 12 von der Triebwerkszapfluftleitung 14 abzweigt. Im übrigen entsprechen der Aufbau und die Funktionsweise des in Figur 4 gezeigten Kühlsystems 10 dem Aufbau und der Funktionsweise der Anordnung gemäß Figur 2.

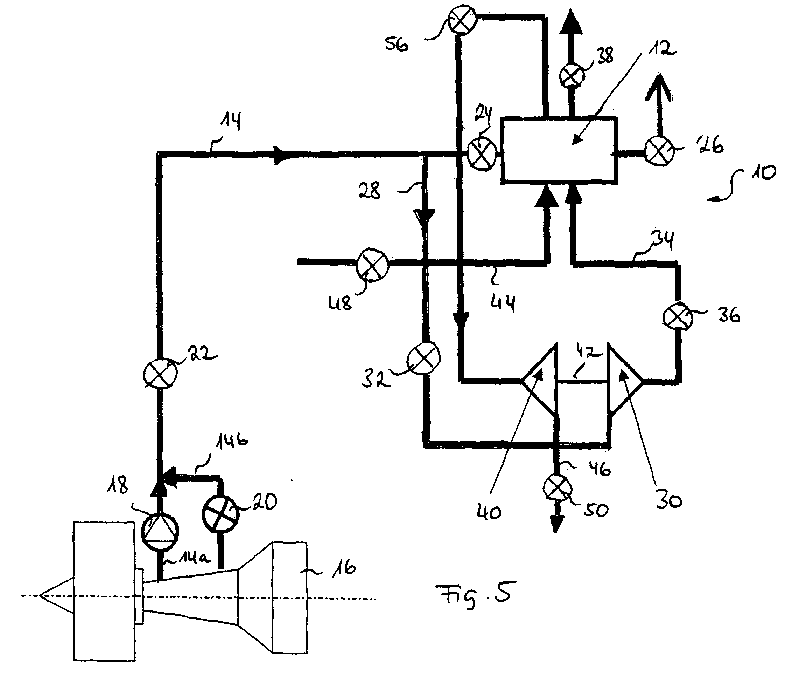

Figur 5 zeigt ein Kühlsystem 10, das sich von dem System gemäß Figur 1 dadurch unterscheidet, dass die mit der Eingangsseite des Kompressors 40 verbundene Umgebungsluftleitung 44 thermisch mit dem Wärmetauscher 12 gekoppelt ist. Die Kühlenergie, die in der von dem Kompressor 40 durch die Umgebungsluftleitung 44 gesaugten Umgebungsluft enthalten ist, kann somit zur Kühlung des Wärmetauschers 12 genutzt werden. Die Nutzung der Leistung des Kompressors 40 zur Bereitstellung zusätzlicher Kühlenergie für den Wärmetauscher 12 ermöglicht auf energieeffiziente Weise eine Erhöhung der Kühlleistung des Kühlsystems 10. Zur Steuerung der Umgebungsluftströmung durch die Umgebungsluftleitung 44 ist in der Umgebungsluftleitung zwischen dem Wärmetauscher 12 und der Eingangsseite des Kompressors 40 ein weiteres Steuerventil 56 vorgesehen. Im übrigen entsprechen der Aufbau und die Funktionsweise des in Figur 5 gezeigten Kühlsystems 10 dem Aufbau und der Funktionsweise der Anordnung gemäß Figur 1.

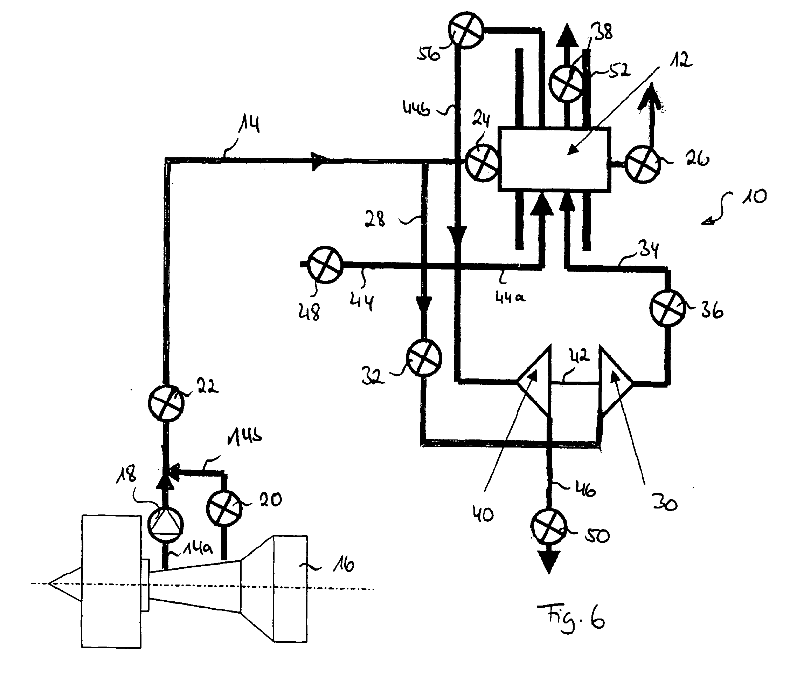

Figur 6 zeigt ein Kühlsystem 10, das sich von dem System gemäß Figur 5 dadurch unterscheidet, dass der Wärmetauscher 12 in einem Kühlkanal 52 angeordnet ist und dass die Umgebungsluftleitung 44, durch die der Kompressor 40 Umgebungsluft ansaugt einen in den Kühlkanal 52 mündenden ersten Abschnitt 44a sowie einen den Kühlkanal 52 mit der Eingangsseite des Kompressors 40 verbindenden zweiten Abschnitt 44b aufweist. Der Kompressor 40 saugt somit Umgebungsluft durch den Kühlkanal 52. Im übrigen entsprechen der Aufbau und die Funktionsweise des Kühlsystems 10 gemäß Figur 6 dem Aufbau und der Funktionsweise der in Figur 5 veranschaulichten Anordnung.

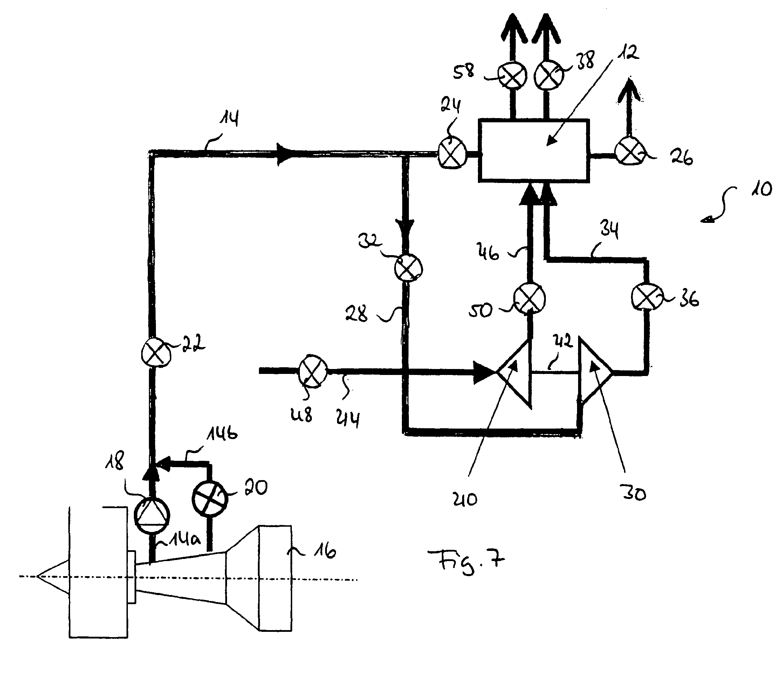

Figur 7 zeigt ein Kühlsystem 10, das sich von dem System gemäß Figur 1 dadurch unterscheidet, dass die mit der Ausgangsseite des Kompressors 40 verbundene Kompressorluftleitung 46 thermisch mit dem Wärmetauscher 12 gekoppelt ist. Mit anderen Worten, die Kompressorluftleitung 46 führt dem Wärmetauscher 12 zur Kühlung die die Kompressorluftleitung 46 durchströmende verdichtete Kompressorluft zu. Nach dem Durchströmen des Wärmetauschers 12 wird die Kompressorluft aus der Kompressorluftleitung 46, ähnlich wie die Kühlluft aus der Kühlluftleitung 34, in die Umgebung abgeführt. Zur Steuerung der Abfuhr der Kornpressorluft aus der Kompressorluftleitung 46 ist ein Steuerventil 58 vorgesehen. In der in Figur 7 gezeigten Anordnung werden die Kompressorluft aus der Kompressorluftleitung 46 und die Kühlluft aus der Kühlluftleitung 34 als separate Luftströme durch den Wärmetauscher 12 geleitet und stromabwärts des Wärmetauschers 12 an die Umgebung abgeführt. Alternativ dazu können die Kompressorluft aus der Kompressorluftleitung 46 und die Kühlluft aus der Kühlluftleitung 34 stromaufwärts oder stromabwärts des Wärmetauschers 12 auch zu einem einzigen Luftstrom vereinigt werden.

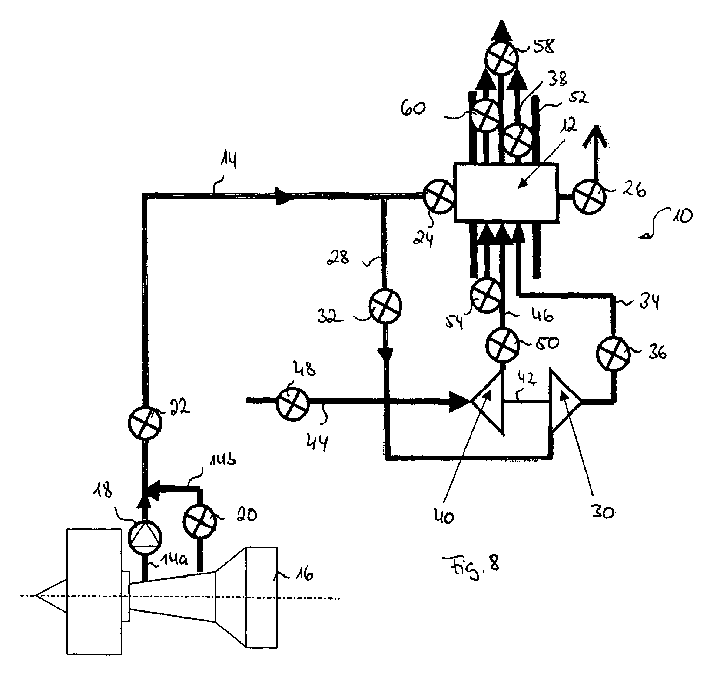

Schließlich zeigt Figur 8 ein Kühlsystem 10, das sich von der Anordnung gemäß Figur 7 dadurch unterscheidet, dass der Wärmetauscher 12 in einem Kühlkanal 52 angeordnet ist. Der Wärmetauscher 12 kann somit durch Kühlluft aus der Kühlluftleitung 34, Kompressorluft aus der Kompressorluftleitung 46 und den Kühlkanal 52 durchströmende Umgebungsluft gekühlt werden. Die Steuerung der Rückführung der den Kühlkanal 52 durchströmenden Umgebungsluft in Umgebung stromabwärts des Wärmetauschers 12 erfolgt mittels eines Steuerventils 60. Wiederum können die Kühlluft aus der Kühlluftleitung 34, die Kompressorluft aus der Kompressorluftleitung 46 und die den Kühlluftkanal 52 durchströmende Umgebungsluft als separate Luftströme durch den Wärmetauscher 12 geleitet werden. Alternativ dazu können einzelne oder alle Luftströme stromaufwärts oder stromabwärts des Wärmetauschers 12 jedoch auch zu einem einzigen Luftstrom vereinigt werden.

Die Steuerventile 20 bis 26, 32, 36, 38, 48, 50 und 54 bis 58 können von einer elektronischen Steuereinheit gesteuert werden. Alternativ dazu können auch mehrere elektronische Steuereinheiten zur Steuerung der Ventile 20 bis 26, 32, 36, 38, 48, 50 und 54 bis 58 vorhanden sein. Ferner kann, je nach Anwendungsanforderungen auf einzelne Ventile oder alle Ventile verzichtet werden. Darüber hinaus können die in den Figuren 5 bis 8 gezeigten Kühlsysteme 10 auch dadurch modifiziert werden, dass die Prozesstuftleitung 28 nicht stromaufwärts, sondern stromabwärts des Wärmetauschers 12 von der Triebwerkszapfluftleitung 14 abzweigt. Ferner kann der Kompressor 40 in den Kühlkanal 52 integriert sein.

## Patentansprüche

1. System (10) zur Kühlung eines Wärmetauschers (12) an Bord eines Flugzeugs, mit:
- einer Prozessluftleitung (28), deren erstes Ende mit einem Triebwerk (16) des Flugzeugs verbunden ist, um der Prozessluftleitung (28) Triebwerkszapfluft zuzuführen, und deren zweites Ende mit einer Eingangsseite einer Turbine (30) verbunden ist, um die die Prozessluftleitung (28) durchströmende Triebwerkszapfluft der Turbine (30) zuzuführen, und
- einer Kühlluftleitung (34), deren erstes Ende mit einer Ausgangsseite der Turbine (30) verbunden ist, um der Kühlluftleitung (34) durch Entspannung der Triebwerkszapfluft in der Turbine (30) erzeugte Kühlluft zuzuführen, und die dazu eingerichtet ist, die die Kühlluftleitung (34) durchströmende Kühlluft dem zu kühlenden Wärmetauscher (12) zuzuführen,
**dadurch gekennzeichnet, dass** das System eine Triebwerkszapfluftleitung (14) umfaßt,
deren erstes Ende über zwei Triebwerkszapfluftleitungszweige (14a, 14b) verfügt, die an unterschiedlichen Positionen mit dem Triebwerk (16) des Flugzeugs verbindbar sind, um der Triebwerkszapfluftleitung (14) Triebwerkszapfluft zuzuführen, und
die Prozessluftleitung (28) von dieser Triebwerkszapfluftleitung (14) abzweigt.

2. Kühlsystem nach Anspruch 1,
**dadurch gekennzeichnet, dass** die Triebwerkszapfluftleitung (14) dazu eingerichtet ist, die die Triebwerkszapfluftleitung (14) durchströmende Triebwerkszapfluft zur Kühlung durch den Wärmetauscher (12) zu leiten.

3. Kühlsystem nach Anspruch 2,
**dadurch gekennzeichnet, dass** die Prozessluftleitung (28) bezogen auf die Strömungsrichtung der Triebwerkszapfluft durch die Triebwerkszapfluftleitung (14) stromaufwärts oder stromabwärts des Wärmetauschers (12) von der Triebwerkszapfluftleitung (14) abzweigt.

4. Kühlsystem nach einem der Ansprüche 1 bis 3,
**dadurch gekennzeichnet, dass** der zu kühlende Wärmetauscher (12) in einem von Umgebungsluft durchströmbaren Kühlkanal (52) angeordnet ist.

5. Kühlsystem nach Anspruch 4,
**dadurch gekennzeichnet, dass** Kühlluftleitung (34) in den Kühlkanal (52) mündet.

6. Kühlsystem nach einem der Ansprüche 1 bis 5,
**gekennzeichnet durch** einen von der Turbine (30) angetriebenen Kompressor (40), der dazu eingerichtet ist, Umgebungsluft anzusaugen und zu verdichten.

7. Kühlsystem nach Anspruch 5,
**dadurch gekennzeichnet, dass** eine Eingangsseite des Kompressors (40) mit einer Umgebungsluftleitung (44) verbunden ist, um Umgebungsluft in die Umgebungsluftleitung (44) zu fördern, wobei die Umgebungsluftleitung (44) dazu eingerichtet ist, die die Umgebungsluftleitung (44) durchströmende Umgebungsluft dem zu kühlenden Wärmetauscher (12) zuzuführen.

8. Kühlsystem nach den Ansprüchen 4 und 7,
**dadurch gekennzeichnet, dass** ein Abschnitt (44a) der Umgebungsluftleitung (44) in den Kühlkanal (52) mündet und/oder dass die Umgebungsluftleitung (44) zumindest teilweise durch den Kühlkanal (52) gebildet wird.

9. Kühlsystem nach Anspruch 5,
**dadurch gekennzeichnet, dass** eine Ausgangsseite des Kompressors (40) mit einer Kompressorluftleitung (46) verbunden ist, um der Kompressorluftleitung (46) verdichtete Kompressorluft zuzuführen, wobei die Kompressorluftleitung (46) dazu eingerichtet ist, die die Kompressorluftleitung (46) durchströmende Kompressorluft dem zu kühlenden Wärmetauscher (12) zuzuführen.

10. Kühlsystem nach den Ansprüchen 4 und 9,
**dadurch gekennzeichnet, dass** ein Abschnitt der Kompressorluftleitung (46) in den Kühlkanal (52) mündet und/oder dass die Kompressorluftleitung (46) zumindest teilweise durch den Kühlkanal (52) gebildet wird.

## Claims

1. System (10) for cooling a heat exchanger (12) on board an aircraft, comprising:
- a process air line (28), a first end of which is connected to an engine (16) of the aircraft in order to supply engine bleed air to the process air line (28) and a second end of which is connected to an input side of a turbine (30) in order to supply the engine bleed air flowing through the process air line (28) to the turbine (30), and
- a cooling air line (34), a first end of which is connected to an output side of the turbine (30) in order to supply the cooling air line (34) with cooling air that is produced by expansion of the engine bleed air in the turbine (30) and which is adapted to supply the cooling air flowing through the cooling air line (34) to the heat exchanger (12) that is to be cooled,
**characterized in that** the system (10) comprises an engine bleed air line (14), a first end of which is provided with two engine bleed air line branches (14a, 14b), which are connectable at different positions to the engine (16) of the aircraft in order to supply engine bleed air to the engine bleed air line (14), and
- the process air line (28) branches off from said engine bleed air line (14).

2. Cooling system according to claim 1,
**characterized in that** the engine bleed air line (14) is adapted to convey the engine bleed air flowing through the engine bleed air line (14) for cooling purposes through the heat exchanger (12).

3. Cooling system according to claim 2,
**characterized in that** the process air line (28) branches off from the engine bleed air line (14), in relation to the direction of flow of the engine bleed air through the engine bleed air line (14), upstream or downstream of the heat exchanger (12).

4. Cooling system according to one of claims 1 to 3,
**characterized in that** the heat exchanger (12) that is to be cooled is disposed in a cooling duct (52), which is adapted to be flowed through with ambient air.

5. Cooling system according to claim 4,
**characterized in that** the cooling air line (34) opens into the cooling duct (52).

6. Cooling system according to one of claims 1 to 5,
**characterized by** a compressor (40), which is driven by the turbine (30) and is adapted to draw in and compress ambient air.

7. Cooling system according to claim 5,
**characterized in that** an input side of the compressor (40) is connected to an ambient air line (44) in order to convey ambient air into the ambient air line (44), wherein the ambient air line (44) is adapted to supply the ambient air flowing through the ambient air line (44) to the heat exchanger (12) that is to be cooled.

8. Cooling system according to claims 4 and 7,
**characterized in that** a portion (44a) of the ambient air line (44) opens into the cooling duct (52) and/or that the ambient air line (44) is formed at least partially by the cooling duct (52).

9. Cooling system according to claim 5,
**characterized in that** an output side of the compressor (40) is connected to a compressor air line (46) in order to supply compressed compressor air to the compressor air line (46), wherein the compressor air line (46) is adapted to supply the compressor air flowing through the compressor air line (46) to the heat exchanger (12) that is to be cooled.

10. Cooling system according to claims 4 and 9,
**characterized in that** a portion of the compressor air line (46) opens into the cooling duct (52) and/or that the compressor air line (46) is formed at least partially by the cooling duct (52).

## Revendications

1. Système (10) de refroidissement d'un échangeur de chaleur (12) à bord d'un avion, comprenant :
- une conduite (28) d'air de processus, dont la première extrémité est reliée à un moteur (16) de l'avion pour amener de l'air de prélèvement du moteur à la conduite (28) d'air de processus, et dont la deuxième extrémité est reliée à un côté entrée d'une turbine (30) pour amener l'air de prélèvement du moteur s'écoulant à travers la conduite (28) d'air de processus à la turbine (30), et
- une conduite (34) d'air de refroidissement, dont la première extrémité est reliée à un côté sortie de la turbine (30) pour amener à la conduite (34) d'air de refroidissement de l'air de refroidissement produit par la détente de l'air de prélèvement du moteur dans la turbine (30), et qui est conçue pour amener l'air de refroidissement s'écoulant à travers la conduite (34) d'air de refroidissement à l'échangeur de chaleur (12) à refroidir,
**caractérisé en ce que** le système comprend une conduite (14)d'air de prélèvement du moteur, dont la première extrémité dispose de deux branches de conduite vd'air de prélèvement du moteur destinées à être reliées au moteur (16) de l'avion à différentes positions pour amener de l'air de prélèvement du moteur à la conduite (14)d'air de prélèvement du moteur, et
que la conduite (28) d'air de processus bifurque de cette conduite (14) d'air de prélèvement du moteur.

2. Système de refroidissement selon la revendication 1,
**caractérisé en ce que** la conduite (14) d'air de prélèvement du moteur est conçue pour conduire l'air de prélèvement du moteur qui s'écoule à travers la conduite (14) d'air de prélèvement du moteur, à travers l'échangeur de chaleur (12) pour le refroidir.

3. Système de refroidissement selon la revendication 2,
**caractérisé en ce que** la conduite (28) d'air de processus bifurque de la conduite (14) d'air de prélèvement du moteur en amont ou en aval de l'échangeur de chaleur (12) par rapport au sens d'écoulement de l'air de prélèvement du moteur à travers la conduite (14) d'air de prélèvement du moteur.

4. Système de refroidissement selon une des revendications 1 à 3,
**caractérisé en ce que** l'échangeur de chaleur (12) à refroidir est disposé dans un canal de refroidissement (52) qui peut être traversé par de l'air ambiant.

5. Système de refroidissement selon la revendication 4,
**caractérisé en ce que** la conduite d'air de refroidissement (34) débouche dans le canal de refroidissement (52).

6. Système de refroidissement selon une des revendications 1 à 5,
**caractérisé par** un compresseur (40) entraîné par la turbine (30), qui est conçu pour aspirer et comprimer de l'air ambiant.

7. Système de refroidissement selon la revendication 5,
**caractérisé en ce qu'**un côté entrée du compresseur (40) est relié à une conduite (44) d'air ambiant pour faire circuler de l'air ambiant dans la conduite (44) d'air ambiant, la conduite (44) d'air ambiant étant conçue pour amener l'air ambiant s'écoulant à travers la conduite (44) d'air ambiant à l'échangeur de chaleur (12) à refroidir.

8. Système de refroidissement selon les revendications 4 et 7,
**caractérisé en ce qu'**une partie (44a) de la conduite (44) d'air ambiant débouche dans le canal de refroidissement (52) et/ou que la conduite (44) d'air ambiant est formée au moins en partie par le canal de refroidissement (52).

9. Système de refroidissement selon la revendication 5,
**caractérisé en ce qu'**un côté sortie du compresseur (40) est relié à une conduite (46) d'air de compresseur pour amener de l'air de compresseur comprimé à la conduite (46) d'air de compresseur, la conduite (46) d'air de compresseur étant conçue pour amener l'air de compresseur s'écoulant à travers la conduite d'air de compresseur (46) à l'échangeur de chaleur (12) à refroidir.

10. Système de refroidissement selon les revendications 4 et 9,
**caractérisé en ce qu'**une partie de la conduite (46) d'air de compresseur débouche dans le canal de refroidissement (52) et/ou que la conduite (46) d'air de compresseur est formée au moins en partie par le canal de refroidissement (52).
